# EUROPEAN PATENT SPECIFICATION

(11) **EP 2 797 474 B1**
(45) Date of publication and mention of the grant of the patent: **14.10.2015**
(21) Application number: 12812267.8
(22) Date of filing: 21.12.2012
(51) Int. Cl.: A47J 31/44, A47J 31/057

(54) **A HOT BEVERAGE PREPARATION MACHINE**
MASCHINE ZUR ZUBEREITUNG HEISSER GETRÄNKE
MACHINE DE PRÉPARATION DE BOISSON CHAUDE

(30) Priority: 30.12.2011 TR 201113305
(43) Date of publication of application: 05.11.2014
(73) Proprietor: Arçelik Anonim Sirketi, 34950 Istanbul (TR); Coban, Omer Burak, 34950 Istanbul (TR); Gerzeli, Ismail, 34950 Istanbul (TR); Hasanreisoglu, Ali Levent, 34950 Istanbul (TR); Vatansever, Celal, 34950 Istanbul (TR); Davasligil, Sena, 34950 Istanbul (TR)
(72) Inventor: COBAN, Omer Burak, 34950 Istanbul (TR); GERZELI, Ismail, 34950 Istanbul (TR); HASANREISOGLU, Ali Levent, 34950 Istanbul (TR); VATANSEVER, Celal, 34950 Istanbul (TR); DAVASLIGIL, Sena, 34950 Istanbul (TR)
(86) International application number: PCT/EP2012/076704
(87) International publication number: WO 2013/098252

(56) References cited:
- WO-A1-2004/028318
- DE-A1- 3 541 479
- DE-A1- 4 241 616
- US-A1- 2005 132 891
- US-A1- 2006 283 332

## Description

The present invention relates to a hot beverage preparation machine comprising a brewing chamber.

In hot beverage preparation machines, the water filled into the water container is heated by a water heater and is transferred to the brewing chamber containing raw material of the beverage to be prepared. The brewing process is performed in the brewing chamber as the result of the interaction between the beverage raw material and water. The brewed beverage is transferred into a pot afterwards and served. Transferring water into the brewing chamber from above and from a point almost at the centre increases the taste and the quality of the brewed beverage.

In the state of the art the People's Republic of China Patent Application No. CN201855137, an embodiment is disclosed, wherein the water is transferred into the brewing chamber from above and from a point almost at the center thereof. The document DE-3541479 discloses a coffee machine with an hinged lid.

The aim of the present invention is the realization of a hot beverage preparation machine wherein the quality of the beverage being brewed is increased.

In the hot beverage preparation machine realized in order to attain the aim of the present invention, explicated in the claims, the brewing chamber has a receptacle, a lid covering the upper surface of the receptacle, a hinge providing the lid to be mounted to the receptacle and a pipe providing the water heated in the water container to be delivered into the receptacle. On the lower surface of the lid, an outlet providing the water to be poured into the receptacle from a top point is situated. One end of the pipe extends to the water container and the other end to the outlet.

In an embodiment of the present invention, the outlet is aligned almost with the central point of the receptacle and provides the water to be poured into the receptacle from a top central point. Thus, the water is enabled to be taken into the receptacle from a desired point.

In an embodiment of the present invention, the lid is formed by joining an inner lid and an outer lid. The pipe is installed between the inner lid and the outer lid.

In another embodiment of the present invention, one part of the pipe is placed into the mould during the production of the lid so that the pipe forms a single piece with the lid.

In an embodiment of the present invention, the pipe is produced from silicone.

In an embodiment of the present invention, after rotating almost 90 degrees in the hinge and passing through the hinge, the pipe extends towards the outlet from over the lid.

In different embodiments of the present invention, the lid may open by rotating in the horizontal axis or the vertical axis.

By means of the present invention, a hot beverage preparation machine that occupies less space on the counter and that is easily produced and used is realized.

The hot beverage preparation machine realized in order to attain the aim of the present invention is illustrated in the attached figures, where:

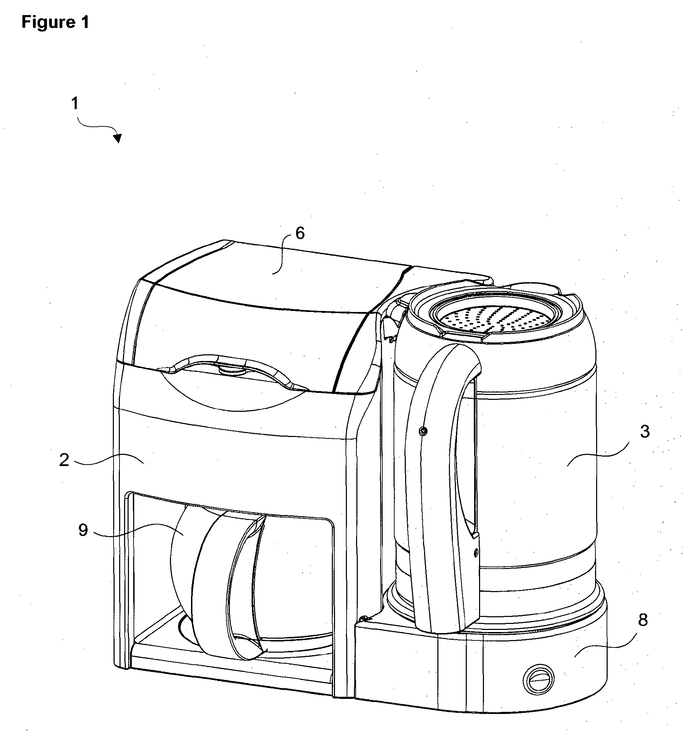

Figure 1 - is the perspective view of a hot beverage preparation machine.

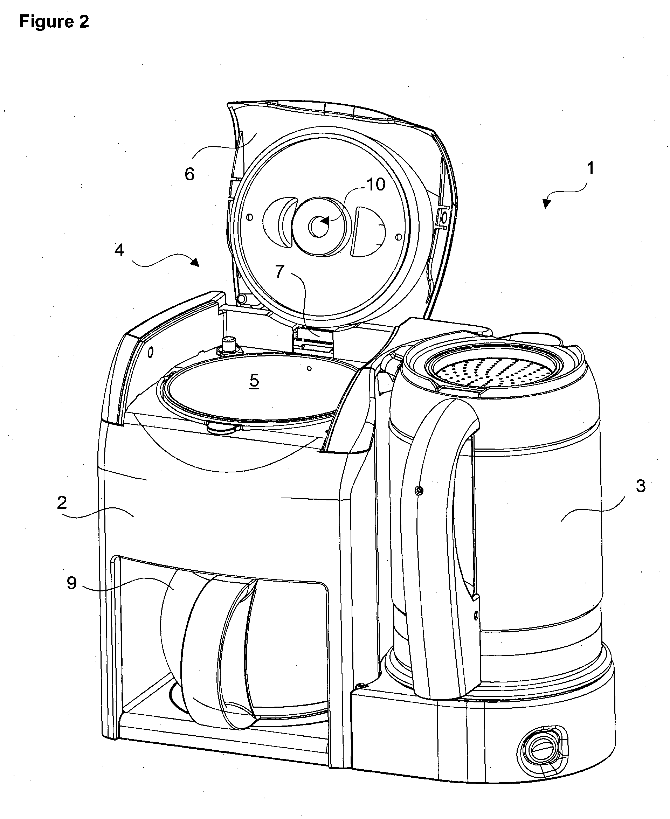

Figure 2 - is the perspective view of a hot beverage preparation machine when the lid is open.

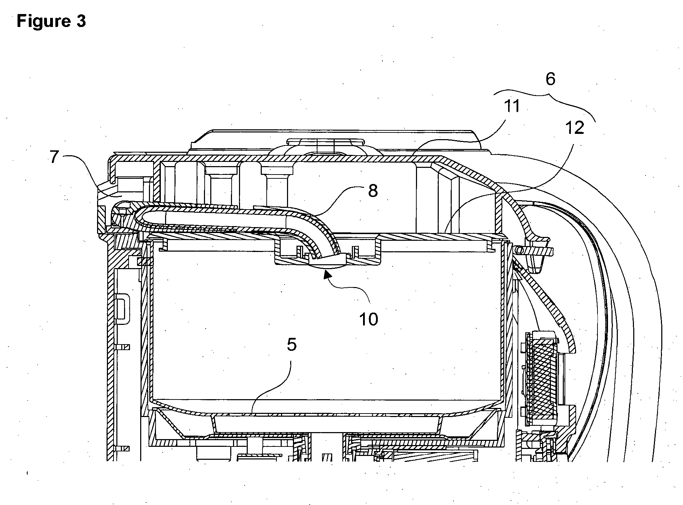

Figure 3 - is the partial sideways cross-sectional view of a hot beverage preparation machine.

The elements illustrated in the figures are numbered as follows:
1. Hot beverage preparation machine
2. Body
3. Water container
4. Brewing chamber
5. Receptacle
6. Lid
7. Hinge
8. Pipe
9. Pot
10. Outlet
11. Inner lid
12. Outer lid

The hot beverage preparation machine (1) comprises:
- a body (2),
- a water container (3) providing the water filled therein to be heated,
- a brewing chamber (4) wherein the raw material of the beverage to be prepared is put and whereto the water heated in the water container (3) is transferred, wherein the brewing process is performed as the result of the interaction between the beverage raw material and water, having a receptacle (5), a lid (6) covering over the receptacle (5), a hinge (7) providing the lid (6) to be fastened to the receptacle (5) in a rotatably openable manner and a pipe (8) providing the water heated in the water container (3) to be delivered into the receptacle (5), and
- a pot (9) situated on the body (2), under the brewing chamber (4), the top surface being at least partially open, whereto the beverage brewed in the brewing chamber (4) is transferred.

In the hot beverage preparation machine (1), the brewing chamber (4) furthermore comprises an outlet (10) arranged on the face of the lid (6) facing the receptacle (5), providing the water to be transferred into the receptacle (5) and the pipe (8) that passes through the hinge (7), providing the water to be conveyed to the outlet (10) from over the lid (6). Thus, while the water is provided to be taken into the receptacle (5) from above, the pipe (8) is prevented from being crashed and bent during the opening/closing of the lid (6).

In an embodiment of the present invention, the outlet (10) is positioned so that the water is enabled to be delivered into the receptacle (5) so as to pour towards the center thereof. Thus, the quality of the beverage being brewed is increased by providing the water to enter the receptacle (5) from the most suitable point.

In the hot beverage preparation machine (1) of the present invention, when hot beverage is desired to be prepared, water is filled into the water container (3) and the water container (3) is placed on the body (2). The water in the water container (3) is provided to be heated. By means of the pipe (8), the heated water is delivered to the outlet (10) from over the hinge (7). The brewing process is realized in the brewing chamber (4) with the mixing of the water and the beverage material. After the brewing process is completed, the beverage is made ready to be served by being transferred into the pot (9) situated under the brewing chamber (4).

In an embodiment of the present invention, the lid (6) comprises an inner lid (11) facing the inner volume of the water container (3) and an outer lid (12) facing the outer environment. In this embodiment, the pipe (8) is placed between the inner lid (11) and the outer lid (12). Thus, the pipe (8) is concealed both at the open and the closed position of the lid (6).

In another embodiment of the present invention, the pipe (8) is produced as a single piece with the lid (6) by being at least partially placed into the mould during the production of the lid (6). Thus, no additional process is required for the mounting of the pipe (8) onto the lid (6).

In an embodiment of the present invention, the pipe (8) is produced from silicone. Thus, hygienic conditions are provided during the transfer of the water.

In this embodiment, the pipe (8) passes through the hinge (7) by rotating such that the end of the pipe (8) that enters into the hinge (7) is almost perpendicular to the end that exits the hinge (7).

In an embodiment of the present invention, the lid (6) is opened by rotating around the horizontal axis.

In another embodiment of the present invention, the lid (6) is opened by rotating around the vertical axis.

By means of the present invention, a hot beverage preparation machine (1) wherein the quality of the beverage being brewed is increased is realized.

It is to be understood that the present invention is not limited to the embodiments disclosed above and a person skilled in the art can easily introduce different embodiments. These should be considered within the scope of the protection postulated by the claims of the present invention.

## Claims

1. A hot beverage preparation machine (1) comprising
- a body (2),
- a water container (3) providing the water filled therein to be heated,
- a brewing chamber (4) wherein the raw material of the beverage to be prepared is put and whereto the water heated in the water container (3) is transferred, wherein the brewing process is performed as the result of the interaction between the beverage raw material and water, having a receptacle (5), a lid (6) covering over the receptacle (5), a hinge (7) providing the lid (6) to be fastened to the receptacle (5) in a rotatably openable manner and a pipe (8) providing the water heated in the water container (3) to be delivered into the receptacle (5), and
- a pot (9) situated on the body (2), under the brewing chamber (4), the top surface being at least partially open, whereto the beverage brewed in the brewing chamber (4) is transferred,
wherein the brewing chamber (4) comprises an outlet (10) arranged on the face of the lid (6) facing the receptacle (5), providing the water to be transferred into the receptacle (5), **characterized in that** the pipe (8) passes through the hinge (7), providing the water to be conveyed to the outlet (10) from over the lid (6).

2. A hot beverage preparation machine (1) as in Claim 1, **characterized by** an outlet (10) that is positioned so that the water is provided to be delivered into the receptacle (5) so as to pour towards the center thereof.

3. A hot beverage preparation machine (1) as in Claim 1 or 2, **characterized by** the lid (6) having an inner lid (11) facing the inner volume of the water container (3) and an outer lid (12) facing the outer environment and **by** the pipe (8) that is placed between the inner lid (11) and the outer lid (12).

4. A hot beverage preparation machine (1) as in Claim 1 or 2, **characterized by** the pipe (8) that is produced as a single piece with the lid (6) by being at least partially placed into the mould during the production of the lid (6).

5. A hot beverage preparation machine (1) as in any one of the above claims, **characterized by** the pipe (8) that is produced from silicone

6. A hot beverage preparation machine (1) as in any one of the above claims, **characterized by** the pipe (8) that passes through the hinge (7) by rotating such that the end of the pipe (8) that enters into the hinge (7) is almost perpendicular to the end that exits the hinge (7)..

7. A hot beverage preparation machine (1) as in any one of the above claims, **characterized by** the lid (6) that is opened by rotating around the horizontal axis.

8. A hot beverage preparation machine (1) as in any one of the claims 1 to 6, **characterized by** the lid (6) that is opened by rotating around the vertical axis.

## Patentansprüche

1. Heißgetränkzubereitungsmaschine (1), umfassend
- einen Gehäusekörper (2),
- einen Wasserbehälter (3), der dafür sorgt, dass das in ihn gefüllte Wasser erwärmt wird,
- eine Brühkammer (4), in die das Rohmaterial für das zuzubereitende Getränk gegeben wird und an die das im Wasserbehälter (3) erwärmte Wasser übertragen wird, wobei der Brühvorgang aufgrund der Interaktion zwischen dem Getränkerohmaterial und Wasser durchgeführt wird, aufweisend eine Aufnahme (5), einen Deckel (6), der die Aufnahme (5) abdeckt, ein Scharnier (7), das dafür sorgt, dass der Deckel (6) an der Aufnahme (5) befestigt ist, derart, dass er drehbar geöffnet werden kann, und ein Rohr (8), das dafür sorgt, dass das im Wasserbehälter (3) erwärmte Wasser in die Aufnahme (5) geleitet wird, und
- eine Kanne (9), die am Gehäusekörper (2) unter der Brühkammer (4) angeordnet ist, wobei die Oberseite wenigstens teilweise offen ist, und in die das in der Brühkammer (4) gebrühte Getränk übertragen wird,
wobei die Brühkammer (4) einen Auslass (10) umfasst, der an der Fläche des Deckels (6) angeordnet ist, die der Aufnahme (5) zugewandt ist, und dafür sorgt, dass das Wasser an die Aufnahme (5) übertragen wird, **dadurch gekennzeichnet, dass** das Rohr (8) durch das Scharnier (7) verläuft und dafür sorgt, dass das Wasser von oberhalb des Deckels (6) an den Auslass (10) geleitet wird.

2. Heißgetränkzubereitungsmaschine (1) nach Anspruch 1, **gekennzeichnet durch** einen Auslass (10), der derart angeordnet ist, dass das Wasser derart an die Aufnahme (5) bereitgestellt wird, dass es zu deren Mitte hin gegossen wird.

3. Heißgetränkzubereitungsmaschine (1) nach Anspruch 1 oder 2, **dadurch gekennzeichnet, dass** der Deckel (6) einen inneren Deckel (11), der dem Innenraum des Wasserbehälters (3) zugewandt ist, und einen äußeren Deckel (12) aufweist, der der äußeren Umgebung zugewandt ist, und **dadurch, dass** das Rohr (8) zwischen dem inneren Deckel (11) und dem äußeren Deckel (12) angeordnet ist.

4. Heißgetränkzubereitungsmaschine (1) nach Anspruch 1 oder 2, **dadurch gekennzeichnet, dass** das Rohr (8) einstückig mit dem Deckel (6) hergestellt ist, indem es während der Herstellung des Deckels (6) teilweise in der Form angeordnet wird.

5. Heißgetränkzubereitungsmaschine (1) nach einem der vorangehenden Ansprüche, **dadurch gekennzeichnet, dass** das Rohr (8) aus Silikon hergestellt ist.

6. Heißgetränkzubereitungsmaschine (1) nach einem der vorangehenden Ansprüche, **dadurch gekennzeichnet, dass** das Rohr (8) durch das Scharnier (7) tritt, indem es sich derart dreht, dass das Ende des Rohrs (8), das in das Scharnier (7) eintritt, nahezu senkrecht zu dem Ende ist, das aus dem Scharnier (7) austritt.

7. Heißgetränkzubereitungsmaschine (1) nach einem der vorangehenden Ansprüche, **dadurch gekennzeichnet, dass** der Deckel (6) sich durch Drehen um die horizontale Achse öffnet.

8. Heißgetränkzubereitungsmaschine (1) nach einem der vorangehenden Ansprüche 1 bis 6, **dadurch gekennzeichnet, dass** der Deckel (6) sich durch Drehen um die vertikale Achse öffnet.

## Revendications

1. Une machine de préparation de boissons chaudes (1) comprenant;
- un corps (2),
- un réservoir d'eau (3) permettant le chauffage de l'eau y remplie,
- une chambre de préparation (4) dans laquelle la matière première de la boisson à préparer est placée et à laquelle l'eau chauffée dans le réservoir d'eau (3) est transférée et dans laquelle le processus de préparation est effectué en raison de l'interaction entre la matière première de la boisson et l'eau, présentant un réceptacle (5), un couvercle (6) recouvrant le réceptacle (5), une charnière (7) permettant la fixation du couvercle (6) au réceptacle (5) de manière à être ouvert par la rotation et un tuyau (8) qui permet à l'eau chauffée dans le réservoir d'eau (3) d'être livrée dans le réceptacle (5), et
- un pot (9) dont la surface supérieure est au moins partiellement ouverte, qui est placé sur le corps (2), sous la chambre de préparation (4), et auquel la boisson préparée dans la chambre de préparation (4) est transférée,
où la chambre de préparation (4) comprend une sortie (10) qui est arrangée sur la face du couvercle (6) en face du réceptacle (5), permettant le transfert de l'eau dans le réceptacle (5), **caractérisée en ce que** le tuyau (8) passe à travers la charnière (7), permettant à l'eau d'être amenée à la sortie (10) à partir du dessus du couvercle (6).

2. Une machine de préparation de boissons chaudes (1) selon la Revendication 1, **caractérisée par** une sortie (10) qui est positionnée de telle sorte que l'eau est livrée dans le réceptacle (5) de manière à écouler vers le centre de celui-ci.

3. Une machine de préparation de boissons chaudes (1) selon la Revendication 1 ou 2, **caractérisée par** le couvercle (6) présentant un couvercle intérieur (11) faisant face au volume intérieur du réservoir d'eau (3) et un couvercle extérieur (12) faisant face à l'environnement extérieur et **par** le tuyau (8) qui est placé entre le couvercle intérieur (11) et le couvercle extérieur (12).

4. Une machine de préparation de boissons chaudes (1) selon la Revendication 1 ou 2, **caractérisée par** le tuyau (8) qui est produit comme une seule pièce avec le couvercle (6) en étant placé au moins partiellement dans le moule au cours de la production du couvercle (6).

5. Une machine de préparation de boissons chaudes (1) selon l'une quelconque des revendications précédentes, **caractérisée par** le tuyau (8) qui est produit de silicone.

6. Une machine de préparation de boissons chaudes (1) selon l'une quelconque des revendications précédentes, **caractérisée par** le tuyau (8) qui passe à travers la charnière (7) en tournant de telle sorte que l'extrémité du tuyau (8) entrant dans la charnière (7) est presque perpendiculaire à l'extrémité sortant de la charnière (7).

7. Une machine de préparation de boissons chaudes (1) selon l'une quelconque des revendications précédentes, **caractérisée par** le couvercle (6) qui est ouvert en tournant autour de l'axe horizontal.

8. Une machine de préparation de boissons chaudes (1) selon l'une quelconque des revendications de 1 à 6, **caractérisée par** le couvercle (6) qui est ouvert en tournant autour de l'axe vertical.
